# EUROPEAN PATENT APPLICATION

(11) **EP 2 368 455 A1**
(43) Date of publication of application: **28.09.2011**
(21) Application number: 10002854.7
(22) Date of filing: 18.03.2010
(51) Int. Cl.: A44C 5/00, A44C 11/00, A44C 15/00, H04M 1/05

(54) **Body wearable chain with display means**

(71) Applicant: novero GmbH, 40468 Düsseldorf (DE)
(72) Inventor: Schmitz, Uwe, 40229 Düsseldorf (DE); Okulla, Birgit, 59439 Holzwickede (DE)
(74) Representative: Gesthuysen, von Rohr & Eggert

(57) **Abstract**

The invention relates to a body wearable chain of a number of decorative links, in particular a necklace or a bracelet. The specific body wearable chain according to the invention is characterized in that at least some of the links are designed as electronic display-links (1), the decorative impression of the chain as a whole is mainly given by the pictures shown on the display-links (1). Preferably the display-links (1) are designed as self-luminous displays.

## Description

The present invention relates to a body wearable chain of a number of decorative links, in particular to a necklace or a bracelet.

A typical necklace as an example for a body wearable chain according to the invention has a number of decorative links either directly connected or connected to each other by passive intermediate chain-links. At least the decorative links, in most of the cases all links of the necklace, have decorative components, either jewelry components or costume jewelry components or plain decorative components like colored faces or the like.

Hereafter the body wearable chain according to the invention is explained as a necklace. However, any kind of body wearable chain, in particular also a bracelet, shall be covered by the present patent application.

Typical decorative attributes of a body wearable chain are valuable materials, colors and designs as well as shapes and attractive outlines of the chain-links.

In particular for costume jewelry the use of single color or multi-color LEDs (light emitting diodes) on a necklace is known. Such a necklace is mostly used for the fun of it.

It is the object of the present invention to propose a completely new type of body wearable chain with a highly attractive, modem look.

The above object of the invention is met with a bodily wearable chain of a number of decorative links in which at least some of the links are designed as electronic display-links so that the decorative impression of the chain as a whole is mainly given by the pictures shown on the display-links.

The idea of the invention is to provide a body wearable chain where each decorative link of the chain is in fact an electronic display as in a mobile phone or the like. Each display can show a picture or a video. These pictures can be abstract or pure color, they can be art work, they can be real pictures of e.g. jewelry components (e.g. pearls) or they can convey information, e.g. prices etc..

The body wearable chain, in particular the necklace, can be worn by a natural person as a true necklace. It can also be used for sales purposes, e.g. on a mannequin or on a POS (point of sale-dummy).

The displays can be traditional LCD-displays or PLASMA-displays. Preferably they are self-luminous displays. Most preferably they are LED-displays. The most preferred version for the display-links in the inventive body wearable chain are organic light-emitting diodes (OLED). Organic light-emitting diodes are the most advanced means to be used in small, portable system screens. They do not require a backlight to function. OLED-display films are thin and flexible. For detailed information regarding OLEDs see e.g. Shinar "Organic light-emitting devices", Springer-Verlag (2004), ISBN 0-387-95343-4.

The display-links may be provided with additional decorative components, in particular with a decorative frame of the display. Such a decorative frame may e.g. be of sterling silver.

As in a traditional body wearable chain it can be provided that the display-links are connected to each other by passive chain-links. In this version of the body wearable chain according to the invention decorative frames used for the display-links are particularly interesting.

If the display-links are interconnected by passive chain-links the displays of the display-links may be traditional displays of square or rectangular shape.

However, if the display-links are positioned next to each other or immediately adjacent to each other they may be provided with an unsymmetrical shape so that the chain as a whole can still have an arcuate shape as usual for a traditional necklace. Of course, adjacently positioned displays give a most interesting impression and can lead to an impression extremely similar to a true jewelry item if jewelry components are shown on the displays. Here the use of additional decorative frames on the display-links will probably be the exception to the rule.

In a preferred embodiment of the invention the display-links are electrically and for control purposes interconnected with each other and/or to a central control electronics and/or to a central power supply. The central power supply will be in particular a battery pack, preferably a rechargeable battery pack. In this embodiment of the invention the displays on the display-links of the body wearable chain are provided with electrical energy from a central power supply and/or are controlled centrally from a central control electronics. The central control electronics may be integrated into one of the display-links. So a design option is to interconnect the display-links with each other.

An alternative solution is to provide each display-link with its own control electronics and/or with its own power supply. Then each display-link would be a completely independent decorative item.

It is also possible to combine the above mentioned solutions, e.g. by a decentralized power supply but a centralized control electronics.

Anyway, it is generally preferable that the chain is provided with a power jack for charging the battery pack that forms the central power supply.

In a preferred embodiment it is provided that the individual display-links are connected to an electric power supply line as well as are connected by way of an electronic control system, preferably a BUS-system.

The central control electronics which should be usually integrated into one of the electronic display-links enables the body wearable chain to show interrelated pictures on the different displays.

Now, preferred embodiments of the invention are describes with reference to the drawings. In the drawings
- Fig. 1: shows a schematic front view of a necklace as a first embodiment of the invention,
- Fig. 2: shows in a view similar to Fig. 1 a second embodiment of a necklace according to the invention.

The invention relates to a body wearable chain of a number of decorative links. In particular such a body wearable chain is a necklace or, at a smaller size, a bracelet.

In both embodiments the body wearable chain has a number of chain-links. At least some of the links are designed as electronic display-links 1.

The display-links 1 are typical optical displays as in a mobile phone, a PDA (Personal Digital Assistant) or the like.

In both embodiments the central control electronics 2 is integrated into one of the electronic display-links 1.

By means of above explained construction of the body wearable chain the decorative impression of the chain as a whole is mainly given by the pictures shown on the display-links 1.

Similar to a video installation with multiple monitors, the inventive body wearable chain presents an electronic picture on multiple small size monitors, namely the number of electronic display-links 1.

By means of the present invention the body wearable chain, in particular the necklace, can be used as a modem decorative item, in particular a jewelry item where the jewelry is existent only visually, namely on the displays of the display-links 1. It is for example possible to create the illusion of a pearls necklace and then to alter this impression to an all diamonds necklace just by showing different pictures on the displays of the display-links 1.

In a preferred embodiment of the invention it is realized that the display-links are designed as self-luminous displays. In a preferred embodiment thereof it is provided that the display-links are provided with LED-displays, preferably with OLED-displays. In particular the OLED-displays are the most modem form of small size, high-resolution color displays.

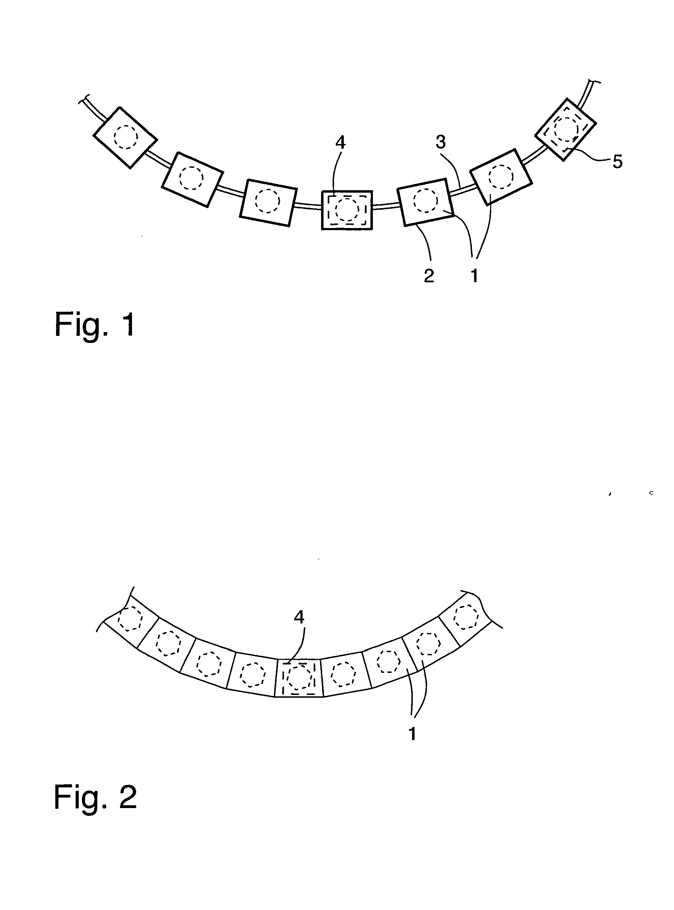

In the embodiment of Fig. 1 it is additionally provided that the display-links are provided with additional decorative components, in particular a decorative frame 2 of the display 1. It is e.g. possible to have a number of interconnected OLED-displays 1. Each display 1 is provided in a sterling silver frame 2, the sterling silver frames being interconnected by passive chain-links 3 of sterling silver, too.

As said in the embodiment of Fig. 1 it is provided that the display-links 1 are connected to each other by passive chain-links 3. Here the traditional form of a necklace is resembled by the alternating links 1 and 3.

The second embodiment of the invention that is shown in Fig. 2 of the drawings has display-links 1 that are positioned directly adjacent to each other. So there are no passive chain-links 3 between the display-links 1. In order to define a chain of an arcuate shape as a whole, the display-links 1 have an unsymmetrical shape. Put together side by side they form the arcuate chain as a whole.

Above mentioned construction is interesting in that there is nearly no delimitation between the displays of the neighboring display-links 1. This is particularly attractive as far as the pictures on the displays are concerned.

In both preferred embodiments of the invention it is provided that the display-links 1 are electrically and for control purposes interconnected which each other and with a central control electronics 4. In both cases this central control electronics 4 is integrated into one of the display-links 1, here as an example in the middle of the chain.

Further it is shown in both embodiments that for power supply of the body wearable chain the chain is provided with a central power supply 5, namely a battery pack 5. The battery pack should preferably be a rechargeable one. In order to recharge the battery pack 5 the chain may be provided with a power jack for charging the battery pack. In the embodiment of Fig. 1 the central power supply 5 is integrated into another one of the display-links 1.

In order to interconnect the display-links 1 the display-links 1 here are electrically and for control purposes interconnected with each other and with the central control electronics 4 as well as with the central power supply 5. So the chain is provided with an electric power supply line and an electronic signal transmittal system, preferably designed as a BUS-system.

In an alternative embodiment not shown in the drawings each display-link 1 may be partly or completely independent as far as control and/or power supply is concerned.

In a preferred embodiment of the invention the chain is provided with an electronic interface for loading of data to a memory of the control electronics 4. Of course, this is an option also for single display-links 1 with their own control electronics. The user may download interesting pictures or decorative designs to be shown on the displays on the display-links 1.

In order to have the chain or each one of its display-links 1 only active in use it will usually be provided with an on/off-switch. Such an on/off-switch can be a manually operated switch. However, such an on/off-switch can also be automatically operated. In a preferred embodiment of the invention both types are used. There is a manually operated on/off-switch for complete termination of the chain's operation. If the chain is manually "on" the automatic control takes over. Automatic control can be based on various parameters measured by sensors on the chain, e.g. movement (motion detector, acceleration detector), skin temperature, ambient temperature, ambient noise or special noise generated by the user, heart pulse frequency, etc.. Depending on the value of the specific parameter was actually measured, pictures/colors displayed can be changed.

In that regard it is preferable that the control electronics 4 is designed and programmed to allow selection of different display modes.

Finally, the chain, in particular if it is a necklace or a bracelet, should be provided with a closure to open or close the item. Closure technology from traditional jewelry can be applied.

## Claims

1. Body wearable chain of a number of decorative links, in particular a necklace or a bracelet,
**characterized in that**
at least some of the links are designed as electronic display-links (1),
the decorative impression of the chain as a whole is mainly given by the pictures shown on the display-links (1).

2. Body wearable chain according to claim 1, **characterized in that** the display-links (1) are designed as self-luminous displays.

3. Body wearable chain according to claim 2, **characterized in that** the display-links (1) are provided with LED-displays, preferably with OLED-displays.

4. Body wearable chain according to any one of the preceding claims, **characterized in that**
the display-links (1) are provided with additional decorative components, in particular a decorative frame (2) of the display (1).

5. Body wearable chain according to any one of the preceding claims, **characterized in that**
the display-links (1) are connected to each other by passive chain-links (3).

6. Body wearable chain according to any one of the claims 1 to 4, **characterized in that**
the display-links (1) are positioned adjacent to each other and have such an unsymmetrical shape that the chain as a whole has an arcuate shape.

7. Body wearable chain according to any one of the preceding claims, **characterized in that**
the display-links (1) are electrically and for control purposes interconnected with each other, and/or with a central control electronics (4), and/or with a central power supply (5), in particular with a preferably rechargeable battery pack (5).

8. Body wearable chain according to claim 7, **characterized in that** the chain is provided with a power jack for charging the battery pack.

9. Body wearable chain according to any one of the preceding claims, **characterized in that**
each display-link (1) is provided with its own control electronics and/or with its own power supply.

10. Body wearable chain according to any one of the preceding claims, **characterized in that**
the chain is provided with an electric power supply line and/or an electronic signal transmittal system, preferably a BUS-system.

11. Body wearable chain according to any one of the preceding claims, **characterized in that**
the chain or each one of its display-links (1) is provided with an electronic interface for loading of data to a memory of the control electronics (4).

12. Body wearable chain according to any one of the preceding claims, **characterized in that**
the chain or each one of its display-links (1) is provided with an manually and/or automatically operated on/off-switch.

13. Body wearable chain according to any one of the preceding claims, **characterized in that**
the control electronics (4) is designed and programmed to allow selection of different display modes.

14. Body wearable chain according to any one of the preceding claims, **characterized in that**
the chain is provided with a closure to open or close the chain.
